**Europäisches Patentamt**

**European Patent Office**

**Office européen des brevets**

(19)

(11)  **EP 1 573 936 B1**

(12)  **EUROPEAN PATENT SPECIFICATION**

(45) Date of publication and mention
of the grant of the patent:
**26.07.2006   Bulletin 2006/30**

(51) Int Cl.:
*H04B 7/06* (2006.01)       *H04B 7/08* (2006.01)
*H04L 27/26* (2006.01)

(21) Application number: **03753484.9**

(22) Date of filing: **30.09.2003**

(86) International application number:
**PCT/EP2003/010846**

(87) International publication number:
**WO 2005/041441 (06.05.2005 Gazette 2005/18)**

(54) **APPARATUS AND METHOD FOR CYCLIC DELAY DIVERSITY**

VORRICHTUNG UND VERFAHREN ZUR ZYKLISCHEN VERZÖGERUNGSDIVERSITÄT

APPAREIL ET PROCEDE DE DIVERSITE DE RETARD CYCLIQUE

(84) Designated Contracting States:
**DE GB**

(43) Date of publication of application:
**14.09.2005   Bulletin 2005/37**

(73) Proprietor: **NTT DoCoMo, Inc.**
**Tokyo 100-6150 (JP)**

(72) Inventors:
• **BAUCH, Gerhard**
  **80799 Munich (DE)**
• **MALIK, Javed, Shamim**
  **81377 Munich (DE)**

(74) Representative: **Schoppe, Fritz et al**
**Schoppe, Zimmermann, Stöckeler & Zinkler**
**Patentanwälte**
**Postfach 246**
**82043 Pullach bei München (DE)**

(56) References cited:
**WO-A-02/25857**

• **ALASTI H ET AL: "A discrete multi carrier multiple access technique for wireless communications" VEHICULAR TECHNOLOGY CONFERENCE, 1998. VTC 98. 48TH IEEE OTTAWA, ONT., CANADA 18-21 MAY 1998, NEW YORK, NY, USA, IEEE, US, 18 May 1998 (1998-05-18), pages 1533-1537, XP010288028 ISBN: 0-7803-4320-4**
• **DAMMANN A ET AL: "Standard conformable antenna diversity techniques for OFDM and its application to the DVB-T system" GLOBECOM'01. IEEE GLOBAL TELECOMMUNICATIONS CONFERENCE (CAT. NO.01CH37270), GLOBECOM '01. IEEE GLOBAL TELECOMMUNICATIONS CONFERENCE, SAN ANTONIO, TX, USA, 25-29 NOV. 2001, pages 3100-3105 vol.5, XP002279223 2001, Piscataway, NJ, USA, IEEE, USA ISBN: 0-7803-7206-9 cited in the application**

**Description**

The present invention is in the field of telecommunications and in particular, in the field of multi-carrier transmission scheme in a multi-user scenario.

In wireless communications, transmit diversity techniques are used in order to mitigate the detrimental effects of fading. A simple transmit diversity technique is delay diversity where the same signal is transmitted from multiple antennas with different delay. This results in an equivalent of input channel with increased frequency selectivity, and therefore, increased frequency diversity - compared to the original subchannel from each transmit to each receive antenna. In an orthogonal frequency division multiplexing (OFDM), frequency diversity introduced in a transmitter can be exploited by a forward error correcting decoder arranged in a receiver.

However, introducing additional delay in multicarrier transmission systems, which is often required for achieving a time diversity, requires a longer guard interval which, consequently, results in a reduced bandwidth efficiency. If the guard interval is not sufficiently long, inter-carrier interference may occur. However, increasing the length of the guard interval results in a reduced bandwidth efficiency, since the guard interval cannot be applied to information transmission.

An increased frequency selectivity without exceeding the guard interval can be achieved introducing a cyclic delay diversity, as described in: A. Dammann and S. Kaiser, "Standard conformable antenna diversity techniques for OFDM systems and its application to the DVB-T system", IEEE Globecom, pages 3100-3105, November 2001, in: A. Dammann and S. Kaiser, "Low complex standard conformable antenna diversity techniques for OFDM systems and its application to the DVB-T system", 4th International ITG Conference on Source and Channel Coding, pages 253-259, January 2002, and in: A. Dammann, R. Raulefs, and S. Kaiser, "Beamforming in combination with space-time diversity for broadband OFDM systems", IEEE Conference on Communications (ICC), pages 165-171, April 2002. In accordance with the teachings of the above documents, a delay is introduced in a cyclic manner such that the guard interval is not exceeded.

Transmit diversity techniques are traditionally applied in a multi-user scenario in order to transmit a signal through a plurality of channels, wherein the transmit signal comprises a plurality of signal streams associated with a plurality of users. At a receiver, the user streams are separated by explicitly exploiting the transmit diversity provided by a processing of the transmit signal.

In order to generate transmit diversity, cyclic delay diversity may be applied for transmitting data simultaneously from different transmit antennas, wherein each data stream associated with a transmit antenna has a delay with respect to the other data streams. At the receiver, a single receive antenna or a plurality of receive antennas can be applied.

In order to efficiently exploit the available bandwidth, the characteristics of the applied transmit diversity technique should be taken into account for effectively exploiting the full spatial diversity. For example in a multi-carrier transmissions scenario, the applied transmit diversity technique may have an influence on correlation properties between sub-carriers at the receiver. As mentioned before, the spatial diversity can be transformed into the frequency diversity which is can be picked up by the decoder.

In a broadband orthogonal frequency division multiple access system (OFDMA), the available bandwidth is shared by several users. Usually, a block frequency interleaver is applied, i.e. the transmit symbols of a user are assigned to sub-carriers with an equal spacing in order to exploit frequency diversity such that neighbouring sub-carriers are allocated to different users. However, in combination with the previously mentioned cyclic delay diversity, where spatial diversity is reflected in uncorrelated channel coefficients of neighbouring sub-carriers, and hence in uncorrelated carriers, a frequency block interleaving may result in a complete failure to exploit spatial diversity. Hence, the available bandwidth is not efficiently exploited, since, for a user stream, an increased bit error rates occurs after decoding.

In order to improve the system's performance, a more complex coding scheme may be applied for coding the different user streams by introducing an increased redundancy. However, this approach suffers form the fact, that the increased redundancy reduces the bandwidth efficiency. The spatial diversity, when considering the standard diversity techniques, may also be exploited by increasing a number of transmit and receive antennas. However, especially in a multi-user scenario, the increased number of receive antennas would increase the complexity of the overall system, in particular a complexity of a mobile receiver.

A further possibility of improving the systems performance of a conventional multi-carrier transmission system using diversity techniques is to exceed a length of a guard interval in order to reduce interferences. However, this approach suffers from a reduced bandwidth efficiency.

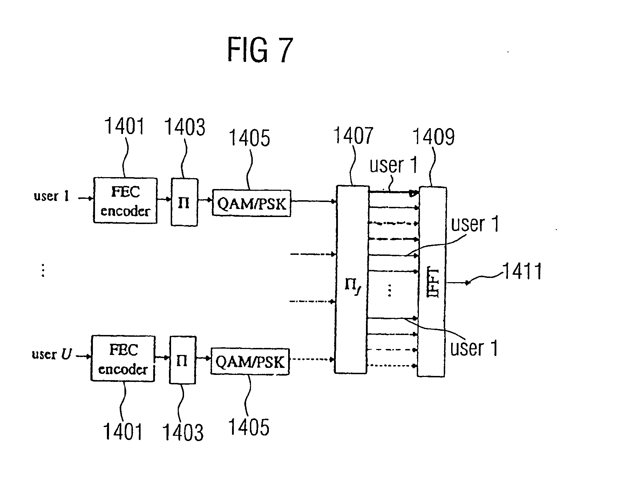

Fig. 7 shows a conventional OFDMA system (OFDMA = orthogonal frequency division multiple access). The OFDMA system of Fig. 7 comprises a plurality of FEC encoders 1401 having an input and an output, wherein the respective outputs of the plurality of the FEC encoders 1401 are connected to a plurality of interleavers 1403. Each of the plurality of the interleavers 1403 has an output connected to an associated mapper 1405 for mapping the discrete values provided by the respective interleaver 1403 on signals space representatives according to a chosen signal space constellation scheme (modulation). In Fig. 7, the mapper 1405 performs for example a QAM (QAM = quadrate amplitude modulation) or PSK (PSK = phase shift keying) modulation. Each of the plurality of mappers 1405 has an output connected to a interleaver 1407 having a plurality of outputs connected to a IFFT block 1409 in (IFFT = inverse fast Fourier transform). The IFFT block 1409 has a plurality of outputs 1411 for providing a multi-carrier modulated signal.

Each of the FEC encoders 1401 receives a corresponding user signal, wherein in Fig. 7 user 1 and user U are depicted. In a conventional OFDMA system of Fig. 7, the available sub-carriers are allocated to a particular user by using the interleaver 1407 for distributing the symbols of a user signal on sub-carriers with a fixed spacing in order to exploit diversity. If cyclic delay diversity is applied, such a block interleaving may introduces an error since the correlation properties of sub-carries are not taken into account. In Fig. 7, the sub-carriers s = 0, 3, 7, ... are allocated to user 1. However, user 1 can not completely pick up the spatial diversity, when the applied spatial diversity technique introduces a correlation between the carriers allocated to user 1. A further disadvantage of the system of Fig. 7 is that the frequency selectivity of the channel can not be taken into account since a fixed allocation scheme is used. Therefore, the conventional OFDMA systems do not fully exploit the frequency diversity which results in a reduced performance with respect to bandwidth efficiency.

H. Alasti et al disclose in "A Discrete Multi 'Carrier Multiple Access Technique for Wireless Communications" (Mobile Research Group Department of Electrical and Computer Engineering, Isfahan University of Technology, Iran) a digital implementation of a multi carrier multiple access system comprising, after a DFT, a cyclic shift block for cyclically shifting a sequence based on an user index.

A. Damman et al disclose in "Standard Conformable Antenna Diversity Techniques for OFDM and its Application to the DVB-T system", German Aerospace Center (DLR), Institute of Communications and Navigation, 82234 Oberpfaffenhofen, Germany an OFDM system with transmitter sided or with receiver sided cyclic delay diversity, the OFDM system comprising cyclic shift elements for cyclically shifting a plurality of antenna signals.

It is the object of the present invention to provide a concept for an efficient multi-user transmission based on a multi-carrier modulation scheme.

This object is achieved by an apparatus for generating a transmit signal according to claim 1 or by a multi-user transmitter according to claim 8 or by an apparatus for extracting a user signal according to claim 9 or by a method for generating a transmit signal according to claim 17 or by a method for processing a multi user signal according to claim 18 or by a method for extracting a user signal according to claim 19 or by a computer program according to claim 20.

The present application is based on the finding, that, in a multi-carrier transmission scenario, a performance of a multi-user transmission scheme applying the conventional sub-carrier allocation scheme for allocating the user signals can be increased, when certain correlation properties between the sub-carriers are introduced prior to transmission. In particular, it has been found that the spatial diversity can fully be exploited, when, at the transmitter or at the receiver, cyclic delay diversity scheme is used, wherein the cyclic delays are determined by a number of users.

It is an advantage of the present invention, that the spatial diversity can fully be exploited for simultaneously transmitting a plurality of multi user signals without increasing the receiver complexity, since the spatial diversity is transformed into frequency diversity by the inventive cyclic diversity scheme. Therefore, a number of received signals to be processed can be reduced compared with a standard approach, which allows a reduction of signal processing resources required for extracting the corresponding user signal.

It is a further advantage of the present invention that the inventive concept can be applied to full exploitation of the spatial diversity in a plurality of conventional multi user transmission schemes, e.g. OFDM, since, in accordance with the present invention, the signals to be transmitted are post processed without changing the frame structure of the signal to be transmitted or an applied spectrum allocation scheme.

In accordance with the present invention, the cyclic delay is chosen such that sub-carriers associated with subsequent user signal values are uncorrelated. An interleaving strategy ensures that the full spatial diversity can be exploited using forward error correction codes of limited constraint length.

It is a further advantage of the present invention, that the inventive cyclic delay diversity concept is simple, since only shift operations are required in order to fully exploit the spatial diversity.

It is a further advantage of the present invention, that, due to system's linearity, the inventive cyclic diversity scheme can be implemented in the receiver. Therefore, spatial diversity can be obtained without altering a transmitter structure.

Further embodiments of the present invention are described in detail with respect to the following figures, in which:

Fig. 1     shows a block diagram of an inventive apparatus for generating a transmit signal from a multi-user signal in accordance with a first embodiment of present invention;

Fig. 2     shows a correlation function for the inventive cyclic delay diversity scheme with two transmit antennas;

Fig. 3     shows a block diagram of an apparatus for extracting a user signal from a first and from a second receive signal in accordance with a first embodiment of the present invention;

Fig. 4      demonstrates cyclic delay diversity in a coded OFTM (transmitter);

Fig. 5      demonstrates cyclic delay diversity in a coded OFTM (receiver);

Fig. 6a     demonstrates a fading channel and the corresponding uncoded error rate;

Fig. 6b     shows the channel of Fig. 6a transformed by the cyclic delay diversity and the corresponding uncoded error rate; and

Fig. 7      shows a block diagram of a conventional spectrum allocation scheme in a conventional OFDM multi-user transmitter.

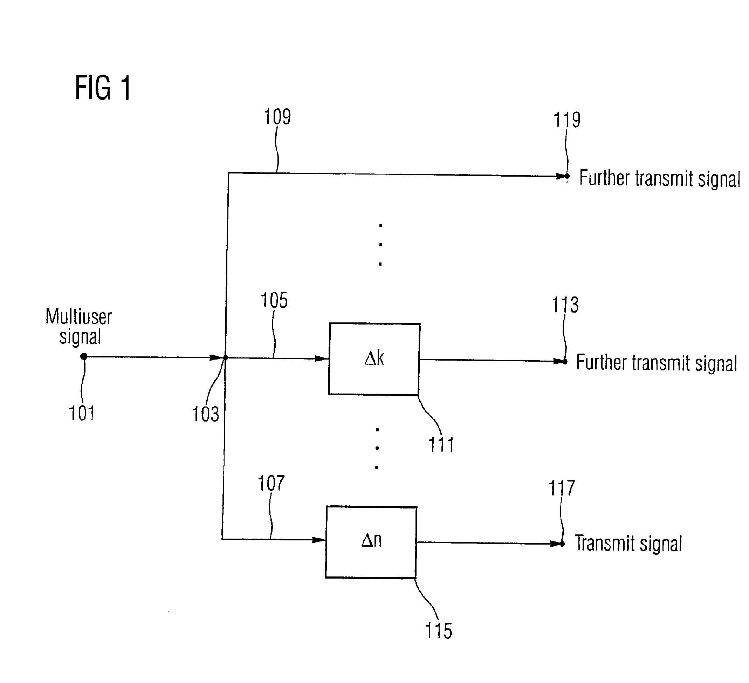

Fig. 1 shows a block diagram of an apparatus for generating a transmit signal from a multi-user signal in accordance with the present invention. The apparatus comprises the input 101 coupled to a signal copier 103. The signal copier 103 provides a plurality of paths, wherein, for the sake of descriptional simplicity, a first signal path 105, a second path 107 and a further path 109 are shown.

The first path 105 is coupled via a cyclic shift element 111 to an output 113 of a plurality of outputs of the apparatus for generating the transmit signal. The signal path 107 is coupled via a cyclic delay element 115 to the output 117 of the inventive apparatus. The further path 109 is directly coupled to an output 119 of the plurality of outputs of the apparatus for generating the transmit signal.

The multi-user signal is provided via the input 101 to the signal copier 103. The multi-user signal may comprise a superposition of a number of user signals, each of which being associated with a different user. Moreover, the multi-user signal may be a digital signal comprising a set of values starting with a first value and ending with a second value placed after the first value. In other words, the multi-user signal comprises, at a predetermined time instant, the set of values in a predetermined order of appearance.

The signal copier 103 may be, for example, a multiplexer for providing a number of paths. Preferably, the number of paths is equal to the number of user signals to be transmitted. In order to achieve cyclic diversity required for an efficient detection of the respective user signal, the second path 107 is coupled to the cyclic shift element 115 for cyclically shifting the multi-user signal (or a copy thereof) to obtain the transmit signal via the output 117. The cyclic shift element is operative to cyclically shift the set of values comprised by the multi-user signal provided via the second path 107 by a predetermined number of values. In accordance with the present invention, the predetermined number of values is determined by the number of user signals. For example, the cyclic shift element 117 is a shift register being operative to perform a left shift or a right shift by the predetermined number of values. For example, the cyclic shift element 117 may be wired such, that the set of values is always shifted by a predetermined number of values. Alternatively, the inventive apparatus shown in Fig. 1 may comprise a means for providing the predetermined number of values being operative to determine the predetermined number of values depending on the number of user signals.

In accordance with the present invention, the cyclic delay can be used in an already existing, standardized system having a fix interleaving and user assignment scheme in order to fully exploit spatial diversity. In the following, it is assumed that the multi-user signal provided via the input 101 is generated by a conventional transmitter as shown in Fig. 7. In particular, it is assumed that the multi-user signal is formed from a multi-carrier signal having $N_S$ carrier frequency, wherein the transmit signal is to be transmitted by a transmit antenna of a total number of $n_T$ transmit antennas, wherein each transmit antenna is associated with a numbering index, for example greater than zero and smaller than or equal to the number of antennas. The cyclic shift element 115 is operative to cyclically shift the set of values by

$$\Delta_n \; = \; \frac{N_s(n \, - \, 1)}{n_T U}$$

wherein n denotes a numbering index associated with the transmit antenna to be used to transmit the transmit signal provided via the output 117. Furthermore, U denotes the number of users.

As mentioned before, the number of users determines the number of values the set of values should be shifted by. Moreover, the number of antennas may also determine a number of paths provided by the signal copier 103.

For example, the number of antennas is equal to 2. In this case, the signal copier 103 may be operative to provide two copies of the multi-user signal in order to provide the transmit signal and a further transmit signal to be transmitted by a further antenna of the plurality of antennas.

In order to provide the further transmit signal, the inventive apparatus may further comprise a means for genera ting the further transmit signal from the copy of the multi-user signal provided via the signal copier 103. In the case of two antennas, the means for generating may be operative to provide a copy of the multi-user signal as the further transmit signal, this case corresponds to the further path 109, which is connected to the output 119. Now, the inventive apparatus is simplified since the second path 105 and further processing elements associated with the second path 105 are not present.

If the number of antennas is greater than 2, then the signal copier 103 may be operative to provide the number of copies. In this case, the inventive apparatus may comprise a further shift element for cyclically shifting the copy of the multi-user signal provided via the second signal path 105 to obtain the further transmit signal, as is depicted in Fig. 1. In particular, the copy of the multi-user signal may comprise a set of values having an identical structure as previously described. The cyclic shift element 111 shown in Fig. 1 represents the further shift element, when the number of antennas is greater than 2. Accordingly, the cyclic shift element 111 is operative to shift the set of values by a further predetermined number of values, wherein the further predetermined number of values is determined by the number of users. The further shift element 111 may be a shift register having a functionality described above. In accordance with the present invention, the further predetermined number is:

$$\Delta_k = \frac{N_s(k-1)}{n_T U}$$

wherein k denotes a numbering index associated with the further transmit antenna and wherein k is greater than zero and equal to or smaller than the number of antennas.

Accordingly, the inventive apparatus as shown in Fig. 1 may further comprise means for providing the predetermined number and the further predetermined number of values in order to control the operation of the shift elements 111 and 115.

The inventive means for providing the predetermined number and the further predetermined number of values are operative to calculate the respective number of values by evaluating the above specified formulas. Alternatively, the means for providing the number of values may comprise a storage element, wherein, for each multi-user scenario and each antenna, the number of values is stored.

As discussed above, the inventive concept may be integrated in any multi-user system applying a multi-carrier transmission scheme. According to the present invention, the above-discussed apparatus for generating a transmit signal from the multi-user signal may be integrated in a multi-user transmitter further comprising means for providing the multi-user signal from the number of user signals. For example, the means for providing the multi-user signal is a conventional transmitter as depicted in Fig. 7.

The inventive cyclic diversity scheme is based on an efficient exploitation of general correlation properties. To be more specific, the inventive delays (shifts) are chosen such that, depending on the number of users and on the used sub-carrier allocation scheme, successive user signal values are transmitted via certain carrier frequencies, wherein the carrier frequencies being assigned to successive user signal values are mutually uncorrelated or almost uncorrelated. In particular for the case of an OFDM transmission scenario, an efficient choice of cyclic delay may improve or even determine the correlation properties of the carrier frequencies, or in other words, of the effective channel frequency response. In accordance with the present invention, the cyclic delays are chosen such that a forward error correction decoder implemented in a receiver exploits, for each user, the full spatial diversity, which is inherent in a channel.

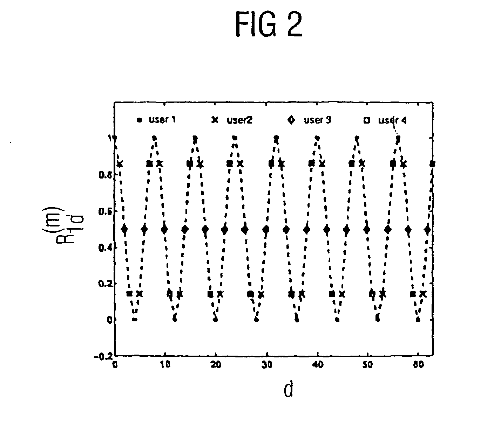

Fig. 2 shows a correlation function $R_{1d}$ for an inventive cyclic delay diversity with two transmit antennas and a cyclic delay $\Delta_2 = \frac{N_s}{2U} = \frac{N_s}{2 \cdot 4}$ in a case of a flat fading channel. The cyclic delays (cyclic shifts are chosen according to

$$\Delta_n = \frac{N_s(n-1)}{n_T U},$$

where U is the number of users or a spacing of sub-carriers assigned to one user, respectively. The resulting correlation function depicted in Fig. 2 is determined for four users.

The inventive choice cyclic delay guarantees that sub-carriers with a spacing of $U = 4$ are uncorrelated, whereas sub-carriers with a spacing of $2U = 8$ are identical. Consequently, the spatial diversity is transformed into frequency diversity between sub-carriers with a spacing of U. Since sub-carriers with the spacing of U are allocated to one user (indicated with bullets in Fig. 2), then each user can pick-up the full spatial diversity. As demonstrated in Fig. 2, the inventive concept may be applied to any system for a given sub-carrier assignment.

As mentioned above, the inventive concept may also be applied in a receiver, since the transmission system may be considered as a linear system.

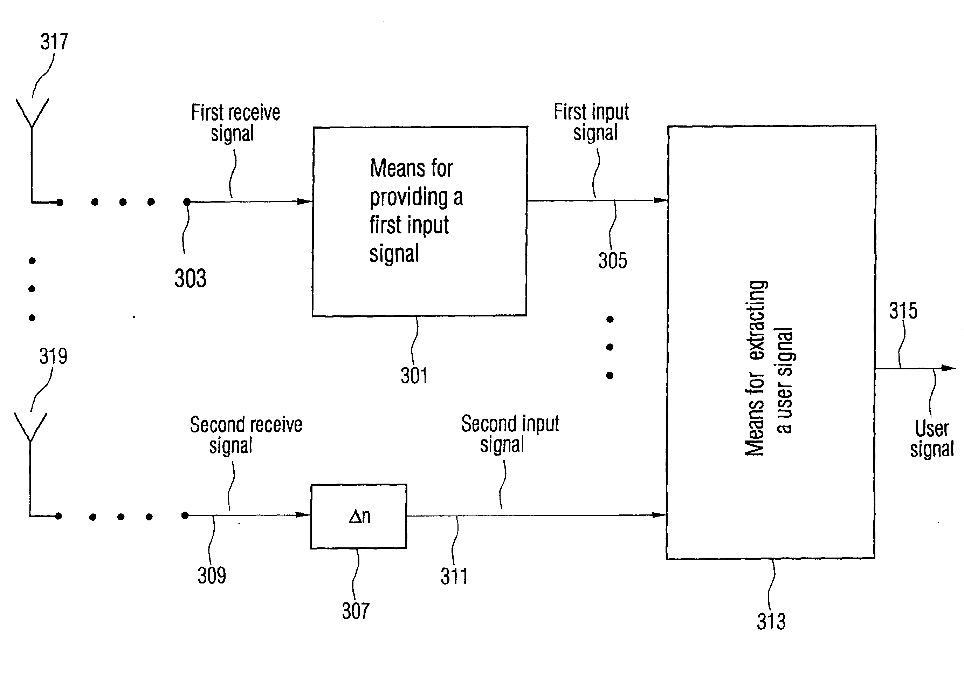

Fig. 3 shows an apparatus for extracting a user signal from a first receive signal into a second receive signal in accordance with the present invention.

The apparatus comprises a means 301 for providing a first transmit signal, the means 301 having an input 303 and an output 305. Furthermore, the apparatus comprises a cyclic shift element 307 having an input 309 and an output 311.

The output 305 of the means 301 for providing the first input signal and the output 311 of the cyclic shift element 307 are coupled to a means 313 for extracting a user signal, the means having an output 315.

The means 301 for providing a first input signal receives via the input 303 a first receive signal associated with a first receive antenna 317. Accordingly, the cyclic shift element 307 receives via the input 309 a second receive signal associated with a second receive antenna 319. The first receive antenna 317 and the second receive antenna 319 are two representatives of a plurality of receive antennas, each receive antenna defining a receiving path. The plurality of receive antennas is operative for detecting a received version of a transmit signal. In other words, the first receive signal is a version of the transmit signal received by the first receive antenna 317 of the plurality (total number) of receive antennas. Accordingly, the second receive signal is a version of the transmit signal received by the second receive antenna of the total number of receive antennas. The first receive signal and the second receive signal are formed from the respective detected high-frequency signals. The high-frequency signals are, subsequently, down converted to base band. After an optional analogue to digital conversion, the first receive signal and the second receive signal are provided as digital signals. Hence, the first receive signal comprises a first set of values starting with a first value and ending with a last value placed after the first value. Accordingly, the second receive signal comprises a second set of values starting with a first value and ending with a last value placed after the first value. In other words, the first receive signal and the second receive signal may be considered as vectors within a signal space defined by the number of values contained by the first set of values or by the second set of values. Assuming that the transmit signal comprises a superposition of a number of user signals, the first receive signal and the second receive signal include the superposition of the number of user signals transmitted from a transmit antenna via a plurality of communication channels.

The means 301 for providing a first input signal is operative for receiving the first receive signal and for outputting the first input signal via the output 305. The operation of the means 301 for providing the first input signal and its structure depends on the number of antennas. To be more specific, if the number of antennas is equal to two, then the means 301 for providing the first input signal is operative to output the first receive signal as the first input signal. In this case, the means 301 is providing the first input signal that couples the input 303 to the output 305 by, for example, a wire.

If the number of antennas is greater than two, then the means 301 for providing the first input signal is operative to cyclically shift the first receive signal by a further number of values to obtain the first input signal. In this case, the means 301 for providing the first input signal may be a cyclic shift element comparable to the cyclic shift element 307 associated with the second receive signal. The shift elements can be, for example, registers having an input coupled to an output for performing a (cyclic) left shift or right shift operation.

The cyclic shift element 307 is operative for cyclically shifting the second receive signal by a predetermined number of values with respect to the first input signal to obtain a second input signal.

The first input signal and the second input signal, or, generally, the number of input signals, are provided to the means 313 for extracting a user signal from the number of input signals. The means 313 for extracting the user signal is operative for outputting the user signal via the output 315 for further processing. An operation of the means 313 for extracting the user signal will be described later.

As mentioned above, the inventive apparatus for extracting the user signal is preferably operative in a multi-carrier environment. To be more specific, the transmit signal transmitted via a plurality of channels determined by the number of receive antennas is then formed from a multi-carrier modulation scheme, for example OFDM, using $N_s$ sub-carriers. If the number of antennas is greater than two, then the means for providing the first input signal is operative to cyclically shift the values of the first set of values by a further predetermined number of values defined by

$$\Delta_k = \frac{N_s(k-1)}{n_T U} ,$$

wherein k denotes a numbering index associated with the first receive antenna, $n_T$ denotes the total number of receive antennas and U denotes the number of users.

The numbering index associated with a respective receive or transmit antenna can freely be chosen. Preferably, the transmit or receive antennas are numbered subsequently starting with an numbering index equal to one and ending with a numbering index equal to $n_T$. However, the numbering indices can also be numbered in a decreasing order of appearance.

The operation of the cyclic shift element 307 is similar. The second receive signal is shifted by the predetermined number of values defined by

$$\Delta_n \; = \; \frac{N_s(n \, - \, 1)}{n_T U}$$

wherein n denotes a numbering index associated with the second receive antenna. Preferably, the numbering index associated with the second receive antenna is different from the numbering index associated with the first receive antenna. Hence, the second input signal is shifted by a number of values with respect to the first input signal, wherein the number of values is equal to the predetermined number of values.

It is to be noted that the inventive cyclic shift operation introduces a cyclic delay having an influence on a phase of the input signals with respect to the respective receive signals. Therefore, this operation can also be performed in frequency domain. To be more specific, the first receive signal and the second receive signal are then transformed into frequency domain to obtain frequency domain signals consisting of a number of values being characterized by a magnitude and a phase. After influencing the phase of each value, the resulting frequency domain signals are then transformed back to time domain, so that delayed versions of the respective receive signals are obtained. The transformation to frequency domain can be performed by means of a Fourier transform. Accordingly, the transformation into time domain can be performed by means of an inverse Fourier transform. Same operations can also be performed in a transmitter.

The operation of the cyclic shift elements used in the inventive apparatus for extracting the user signal is identical to the operation of the cyclic shift elements described in connection with the inventive apparatus for generating the transmit signal. Furthermore, the inventive apparatus may comprise means for providing the predetermined number of values and/or for providing the further predetermined number of values. The operation of the means for providing the respective number of values is identical to the operation of the means for providing the further predetermined number of values and/or the predetermined number of values discusses in connection with the inventive apparatus for generating the transmit signal.

As mentioned above, the means 313 for extracting the user signals operative to provide the user signal on the basis of the first input signal and the second input signal. Generally, the means 313 for extracting the user signal is operative to exploit the spatial diversity introduced in the receiver for extracting the user signal. For example, the means 313 for extracting the user signal may be a maximum ratio combiner. In this case, each of the input signals is demodulated via a demodulator applying an inverse modulation scheme to the modulation scheme applied for transmission. The demodulated signals are then combined using the maximum ratio combining scheme optimizing the signal to noise ratio (SNR).

In particular, in a case of a multi-carrier modulation scheme, a transmit signal received by the plurality of antennas is formed from a multi-carrier modulation of a multi-carrier signal having a number of sub-carriers. The user signals can be associated with certain carrier frequency as discussed in connection with the conventional scheme depicted in Fig. 7. If the means 313 for extracting the user signal comprises a maximum ratio combiner, then the input signals are demodulated via an inverse multi-carrier modulation scheme, for example, an inverse Fourier transform.

Preferably, the means 303 for extracting the user signal comprises an adder for adding the number of input signals prior to demodulation. To be more specific, the adder comprised by the means 303 for extracting the user signal is operative for adding the first and the second input signal to obtain a composite input signal, which can be a time domain multi-carrier modulated signal. In order to demodulate the composite input signal, the means 313 for extracting the user signal may comprise a multi-carrier demodulator for demodulating the composite input signal and for providing a demodulated input signal. The multi-carrier demodulator may be operative for performing an inverse Fourier transform or an inverse discrete Fourier transform when OFDM transmission scheme is used. After demodulation, the certain carrier frequencies associated with the user signal to be extracted may be selected a selector which can be comprised by the means 313 for extracting the user signal.

In order to select the certain carrier frequencies, the means for extracting the user signal may receive a user indication information, so that only the certain carrier frequency associated with the user signal to be extracted are further processed. The user indication information may be provided by means for providing user indication, the means being operative for receiving a signaling information, which user signal has to be extracted.

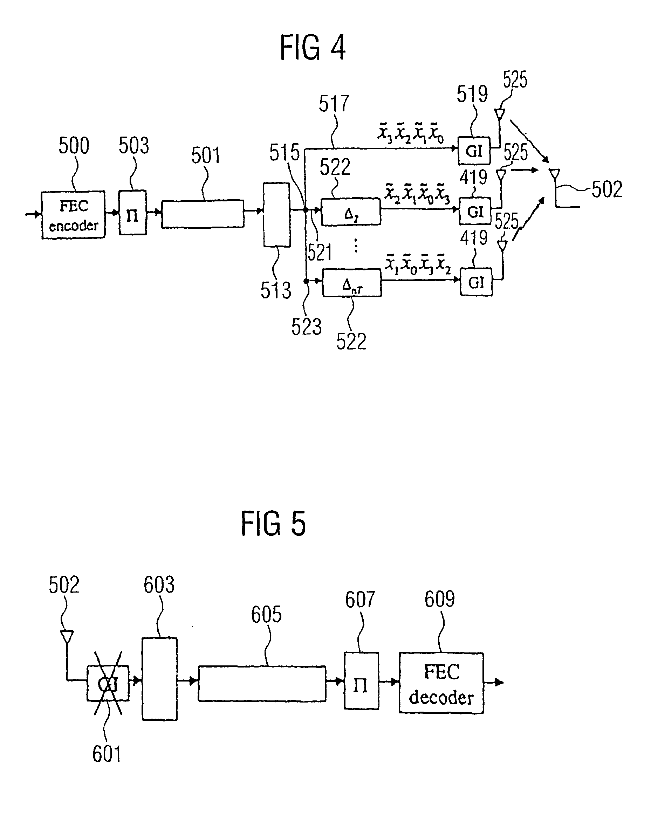

The apparatus in Fig. 4 shows the encoder 501 coupled to the interleaver 503. The output of the interleaver 503 is coupled to the inventive apparatus 501 for providing the multicarrier signal. Compared to the embodiment shown in Fig. 4, the inventive apparatus 501 includes the demultiplexer 505, the number of interleavers 507, the number of encoders 509 and the assigner 511. The multi-carrier signal is provided to the transformer 513. The transformed signal is multiplied at the multiplying point 515 into a number of copies of the transformed signal, the number of copies corresponding to the number of transmit antennas 525.

As depicted in Fig. 4, the signal provided via the signal path 517 is identical to the transformed signal provided by the transformer 513. Due to the shift introduced by the means 522, the copy of the transformed signal provided via the signal path 521 is shifted by one coefficient. Accordingly, the copy of the transformed signal corresponding to the signal path 523 is shifted by one coefficient with respect to the shifted copy corresponding to the signal path 521. As depicted in Fig. 4, the means 522 for introducing the delay are respectively operative to perform a left-shift. Alternatively, the means 522 may be operative to perform a right-shift. Moreover, a number of coefficients, the signals are shifted by, is variable and may be greater than 2.

Generally, the data is encoded by for example a forward error correcting encoder FEC 500 and interleaved. After the (optional) interleaver 503, the code bits are modulated, e.g. on QAM (QAM=quadrature amplitude modulation) or PSK (PSK= phase shift keying) symbols. OFDM is then implemented by using the transformer 513 being operative to perform the inverse fast Fourier transform (IFFT) of size $N_S$, where $N_S$ is the number of sub-carriers. The output symbols of the IFFT 513 are denoted by $\tilde{x}_t$, t = 0, ... , $N_s$ - 1. Each antenna introduces a different cyclic delay $\Delta_n$, n = 1,..., $n_T$, i.e. the transmit symbol from antenna in a time t is given by

$$x_t^{(n)} = \tilde{x}_{(t-\Delta_n)\bmod N_s}, \; t = 0, \ldots, N_s - 1, n = 1, \ldots n_T..$$

Prior to transmission, a cyclic guard interval (GI) is included by the respective means 519 at each transmit antenna.

The system of Fig. 4 is equivalent to the transmission of the sequence $\tilde{x} = {}_L[\tilde{x}_0,...,\tilde{x}_{N_s-1}]$ over a frequency-selective channel with one transmit antenna yet impulse response given by

$$h_{equ,t}^{(1m)} = \left[h_{equ,t}^{(1m)}(0), \ldots, h_{equ,t}^{(1m)}(N_s - 1)\right]$$

to receive antenna m, m = 1, ..., $n_R$, with

$$h_{equ,t}^{(1m)}(d) = \sum_{n=1}^{n_T} h_t^{(nm)}\left((d - \Delta_n) \bmod N_s\right).$$

As depicted in Fig. 4, the transmit antenna 525 transmits signals to the receive antenna 503 considered above.

Fig. 5 shows a corresponding OFDM-receiver structure having the receive antenna 502 at which received signals are impinging. The received signals are then provided via a plurality of further processing means not depicted in Fig. 5 to a means 601 for removing the guard interval. The means 601 for removing the guard interval is coupled to a time-frequency transformer 603 inoperative to perform a fast Fourier transform (FFT). The transformed signals at an output of the transformer 603 are provided to a means 605 for demodulating. The means 605 for demodulating is coupled to the interleaver 607 having an output connected to a forward error correction decoder 609. Particularly, the means 605 for demodulating is operative to perform operations inverse to those performed in the transmitter.

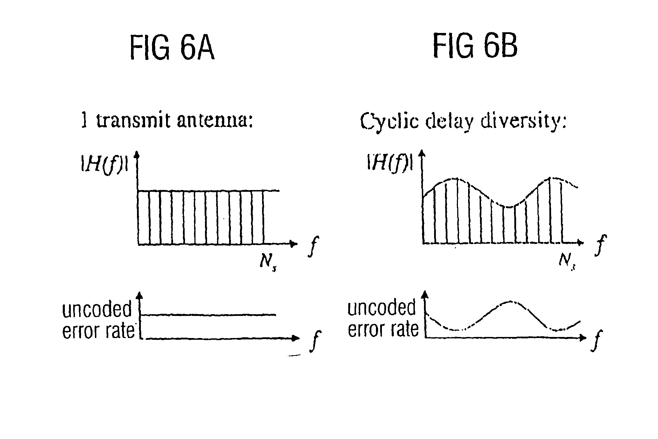

Basically, the cyclic delay diversity transforms the multiple-input-multiple-output (MIMO) channel to a single-input-multiple-output (SIMO) channel having increased frequency selectivity, i.e. the spatial diversity is transformed into frequency diversity. This effect is demonstrated in Fig. 6a and 6b.

In the upper diagram of Fig. 6a, an absolute value of the channel coefficients H(f) over a frequency is shown, wherein a flat fading channel scenario is considered. In the lower diagram of Fig. 6a, a corresponding uncoded error rate over a frequency is depicted. Since in Fig. 6a a flat fading channel is considered, the uncoded error rate follows, by the way of example only, a vertical line over frequency.

In Fig. 6b, the transformation introduced by the cyclic delay diversity is demonstrated.

In the upper diagram of Fig. 6b, an absolute value of the channel coefficients is shown over frequency. Obviously, the channel has been transformed from a flat fading channel to a frequency selective channel having coefficients with increased energy and coefficients with decreased energy. The corresponding uncoded error rate is shown in the lower diagram of Fig. 6b. As can be seen, the uncoded (bit) error rate is not constant over the sub-carriers. However, the average bit error rate for an uncoded transmission will be the same as in the case of a flat fading channel considered in Fig. 6a. Nevertheless, an outer forward error correction decoder can pick up the available frequency diversity.

Depending on certain implantation requirements, the inventive methods can be implemented in hardware or in software. The implementation can be performed using a digital storage medium, in particular, a disk or a CD having electronically readable control signals stored thereon, which can cooperate with a programmable computer system such that the inventive methods are performed. Generally, the present invention is therefore a computer program product with a program code stored on a machine-readable carrier, the program code performing the inventive methods, when the computer program product runs on a computer. In other words, the inventive methods are, therefore, a computer program having a program code for performing the inventive methods, when the computer program runs on a computer.

**Claims**

1. Apparatus for generating a transmit signal from a multi-user signal, the multi-user signal comprising a superposition of a number of user signals, the multi-user signal comprising a set of values, comprising:

   a cyclic shift element (111; 115) for cyclically shifting the multi-user signal to obtain the transmit signal, wherein the cyclic shift element (111; 115) is operative for cyclically shifting the set of values by a predetermined number of values, wherein the predetermined number of values is determined by the number of user signals; wherein the multi-user signal is formed from a multi-carrier signal having $N_s$ carrier frequencies, wherein the transmit signal is to be transmitted by a transmit antenna of a total number $n_T$ of transmit antennas, wherein the predetermined number of values is

$$\Delta_n = \frac{N_s(n-1)}{n_T U}$$

   wherein n denotes a numbering index associated with the transmit antenna transmitting the transmit signal, and U denotes the number of users.

2. Apparatus in accordance with claim 1, wherein a further transmit signal is to be transmitted by a further transmit antenna of a plurality of antennas, the apparatus further comprising:

   a signal copier (103) for providing a copy of the multi-user signal; and
   means for generating the further transmit signal from the copy of the multi-user signal.

3. Apparatus in accordance with claim 2, wherein the means for generating the further transmit signal is operative for providing the copy of the multi-user signal as the further transmit signal.

4. Apparatus in accordance with claim 2, wherein the means for generating the further transmit signal comprises a further shift element (111; 115) for cyclically shifting the copy of the multi-user signal comprising the set of values to obtain the further transmit signal, wherein the further cyclic shift element (111; 115) is operative to cyclically shift the set of values by a further predetermined number of values, wherein the further predetermined number of values is determined by the number of users.

5. Apparatus in accordance with claim 4, wherein the further predetermined number of values is

EP 1 573 936 B1

$$\Delta_k = \frac{N_s(k-1)}{n_T U}$$

wherein k denotes a numbering index associated with the further transmit antenna.

6. Apparatus in accordance with anyone of the preceding claims 1 to 5, further comprising means for providing the predetermined number of values.

7. Apparatus in accordance with claims 4 or 5, further comprising means for providing the predetermined number of values and/or the further predetermined number of values.

8. Multi-user transmitter, comprising:

means for providing a multi-user signal from a number of user signals;
the apparatus according to anyone of claims 1 to 7 for generating the transmit signal from the multi-user signal.

9. Apparatus for extracting a user signal from a first receive signal and from a second receive signal, the first receive signal being a version of a transmit signal received by a first receive antenna of a total number of receive antennas, the second receive signal being a version of the transmit signal received by a second receive antenna of the total number of receive antennas, the first receive signal comprising a first set of values, the second receive signal comprising a second set of values, the transmit signal comprising a superposition of a number of user signals, comprising:

means (301) for providing a first input signal from the first receive signal;
a cyclic shift element (307) for cyclically shifting the second receive signal by a predetermined number of values with respect to the first input signal to obtain a second input signal;
means (313) for extracting the user signal from the first and from the second input signal; wherein the transmit signal is formed from a multi-carrier modulation scheme using $N_S$ subcarriers wherein the predetermined number of values is

$$\Delta_n = \frac{N_s(n-1)}{n_T U}$$

wherein n denotes a numbering index associated with a second receive antenna, $n_T$ denotes the total number of receive antennas and U denotes the number of users.

10. Apparatus in accordance with claim 9, wherein the means (301) for providing the first input signal is operative to output the first receive signal as the first input signal, when the number of antennas is equal to two.

11. Apparatus in accordance with claim 9 or 10, wherein the transmit signal is formed from a multi-carrier modulation scheme using $N_S$ subcarriers, wherein the number of antennas is greater than two, and wherein the means (301) for providing the first input signal is operative to cyclically shift the values of the first set of values by a further predetermined number of values

$$\Delta_k = \frac{N_s(k-1)}{n_T U},$$

wherein k denotes a numbering index associated with the first receive antenna, $n_T$ denotes the total number of receive antennas and U denotes the number of users.

**12.** Apparatus in accordance with claims 9 to 11, wherein the cyclic shift element 307 is a shift register.

**13.** Apparatus in accordance with claims 10 to 12, wherein the means 301 for providing the first input signal comprises a shift register.

**14.** Apparatus in accordance with claims 9 to 13, wherein the transmit signal is formed from a multi-carrier modulation of a multi-carrier signal having a number of subcarriers, the user signal being associated with certain carrier frequencies wherein the means (313) for extracting the user signal comprises
an adder for adding the first and the second input signal to obtain a composite input signal;
a multi-carrier demodulator for demodulating the composite input signal; and
a selector for selecting the certain carrier frequencies to extract the user signal from the demodulated composite input signal.

**15.** Apparatus in accordance with claims 9 to 14, further comprising a means for providing the predetermined number of values.

**16.** Apparatus in accordance with claims 10 to 15, further comprising means for providing the predetermined number of values and/or for providing the further predetermined number of values.

**17.** Method for generating a transmit signal from a multi-user signal, the multi-user signal comprising a superposition of a number of user signals, the multi-user signal comprising a set of values, comprising the following steps of:

cyclically shifting the multi-user signal to obtain the transmit signal, wherein the set of values is cyclically shifted by a predetermined number of values, wherein the predetermined number of values is determined by the number of user signals; wherein
the multi-user signal is formed from a multi-carrier signal having $N_s$ carrier frequencies, wherein the transmit signal is to be transmitted by a transmit antenna of a total number $n_T$ of transmit antennas, wherein the predetermined number of values is

$$\Delta_n = \frac{N_s(n-1)}{n_T U}$$

wherein n denotes a numbering index associated with the transmit antenna transmitting the transmit signal, and U denotes the number of users.

**18.** Method for processing a multi-user signal comprising the following steps of:

providing a multi-user signal from a number of user signals;
generating a transmit signal from the multi-user signal using the method of claim 17.

**19.** Method for extracting a user signal from a first receive signal and from a second receive signal, the first receive signal being a version of a transmit signal received by a first receive antenna of a total number of receive antennas, the second receive signal being a version of the transmit signal received by a second receive antenna of the total number of receive antennas, the first receive signal comprising a first set of values, the second receive signal comprising a second set of values, the transmit signal comprising a superposition of a number of user signals, the method comprising the following steps of:

providing a first input signal from the first receive signal;
cyclically shifting the second receive signal by a number of values with respect to the first input signal to obtain a second input signal;
extracting the user signal from the first and from the second input signal; wherein
the transmit signal is formed from a multi-carrier modulation scheme using $N_s$ subcarriers wherein the predetermined number of values is

$$\Delta_n = \frac{N_s(n - 1)}{n_T U}$$

wherein n denotes a numbering index associated with a second receive antenna, $n_T$ denotes the total number of receive antennas and U denotes the number of users.

20. Computer program having a program code for performing the methods in accordance with claim 17 or 18 or 19, when the program runs on a computer.

**Patentansprüche**

1. Vorrichtung zum Erzeugen eines Sendesignals aus einem Mehrbenutzersignal, wobei das Mehrbenutzersignal eine Überlagerung einer Anzahl von Benutzersignalen aufweist, wobei das Mehrbenutzersignal einen Satz von Werten aufweist, die folgende Merkmale aufweist:

ein Zyklisch-Verschiebung-Element (111; 115) zum zyklischen Verschieben des Mehrbenutzersignals, um das Sendesignal zu erhalten, wobei das Zyklisch-Verschiebung-Element (111; 115) zum zyklischen Verschieben des Satzes von Werten um eine vorbestimmte Anzahl von Werten wirksam ist, wobei die vorbestimmte Anzahl von Werten durch die Anzahl von Benutzersignalen bestimmt ist; wobei das Mehrbenutzersignal aus einem Mehrträgersignal gebildet ist, das $N_s$ Trägerfrequenzen aufweist, wobei das Sendesignal durch eine Sendeantenne einer Gesamtanzahl $n_T$ von Sendeantennen gesendet werden soll, wobei die vorbestimmte Anzahl von Werten

$$\Delta_n = \frac{N_s(n - 1)}{n_T U}$$

beträgt, wobei n einen Nummerierungsindex bezeichnet, der der Sendeantenne zugeordnet ist, die das Sendesignal sendet, und U die Anzahl von Benutzern bezeichnet.

2. Vorrichtung gemäß Anspruch 1, bei der ein weiteres Sendesignal durch eine weitere Sendeantenne einer Mehrzahl von Antennen gesendet werden soll, wobei die Vorrichtung ferner folgende Merkmale aufweist:

einen Signalkopierer (103) zum Liefern einer Kopie des Mehrbenutzersignals; und eine Einrichtung zum Erzeugen des weiteren Sendesignals aus der Kopie des Mehrbenutzersignals.

3. Vorrichtung gemäß Anspruch 2, bei der die Einrichtung zum Erzeugen des weiteren Sendesignals zum Liefern der Kopie des Mehrbenutzersignals als das weitere Sendesignal wirksam ist.

4. Vorrichtung gemäß Anspruch 2, bei der die Einrichtung zum Erzeugen des weiteren Sendesignals ein weiteres Verschiebungselement (111; 115) zum zyklischen Verschieben der Kopie des Mehrbenutzersignals aufweist, das den Satz von Werten aufweist, um das weitere Sendesignal zu erhalten, wobei das weitere Zyklisch-Verschiebung-Element (111; 115) wirksam ist, um den Satz von Werten um eine weitere vorbestimmte Anzahl von Werten zyklisch zu verschieben, wobei die weitere vorbestimmte Anzahl von Werten durch die Anzahl von Benutzern bestimmt ist.

5. Vorrichtung gemäß Anspruch 4, bei der die weitere vorbestimmte Anzahl von Werten

$$\Delta_k = \frac{N_s(k - 1)}{n_T U}$$

beträgt, wobei k einen Nummerierungsindex bezeichnet, der der weiteren Sendeantenne zugeordnet ist.

6. Vorrichtung gemäß einem der vorhergehenden Ansprüche 1 bis 5, die ferner eine Einrichtung zum Liefern der vorbestimmten Anzahl von Werten aufweist.

7. Vorrichtung gemäß Anspruch 4 oder 5, die ferner eine Einrichtung zum Liefern der vorbestimmten Anzahl von Werten und/oder der weiteren vorbestimmten Anzahl von Werten aufweist.

8. Mehrbenutzersender, der folgende Merkmale aufweist:

   eine Einrichtung zum Liefern eines Mehrbenutzersignals aus einer Anzahl von Benutzersignalen;
   die Vorrichtung gemäß einem der Ansprüche 1 bis 7 zum Erzeugen des Sendesignals aus dem Mehrbenutzersignal:

9. Vorrichtung zum Extrahieren eines Benutzersignals aus einem ersten Empfangssignal und aus einem zweiten Empfangssignal, wobei das erste Empfangssignal eine Version eines Sendesignals ist, das durch eine erste Empfangsantenne einer Gesamtanzahl von Empfangsantennen empfangen wird, wobei das zweite Empfangssignal eine Version des Sendesignals ist, das durch eine zweite Empfangsantenne der Gesamtanzahl von Empfangsantennen empfangen wird, wobei das erste Empfangssignal einen ersten Satz von Werten aufweist, wobei das zweite Empfangssignal einen zweiten Satz von Werten aufweist, wobei das Sendesignal eine Überlagerung einer Anzahl von Benutzersignalen aufweist, die folgende Merkmale aufweist:

   eine Einrichtung (301) zum Liefern eines ersten Eingangssignals aus dem ersten Empfangssignal;
   ein Zyklisch-Verschiebung-Element (307) zum zyklischen Verschieben des zweiten Empfangssignals um eine vorbestimmte Anzahl von Werten mit Bezug auf das erste Eingangssignal, um ein zweites Eingangssignal zu erhalten;
   eine Einrichtung (313) zum Extrahieren des Benutzersignals aus dem ersten und aus dem zweiten Eingangssignal; wobei
   das Sendesignal aus einem Mehrträgermodulationsschema unter Verwendung von $N_s$ Unterträgern gebildet ist, wobei die vorbestimmte Anzahl von Werten

$$\Delta_n \;=\; \frac{N_s(n-1)}{n_T U}$$

beträgt, wobei n einen Nummerierungsindex bezeichnet, der einer zweiten Empfangsantenne zugeordnet ist, $n_T$ die Gesamtanzahl von Empfangsantennen bezeichnet und U die Anzahl von Benutzern bezeichnet.

10. Vorrichtung gemäß Anspruch 9, bei der die Einrichtung (301) zum Liefern des ersten Eingangssignals wirksam ist, um das erste Empfangssignal als das erste Eingangssignal auszugeben, wenn die Anzahl von Antennen gleich zwei ist.

11. Vorrichtung gemäß Anspruch 9 oder 10, bei der das Sendesignal aus einem Mehrträgermodulationsschema unter Verwendung von $N_s$ Unterträgern gebildet ist, wobei die Anzahl von Antennen größer zwei ist, und wobei die Einrichtung (301) zum Liefern des ersten Eingangssignals wirksam ist, um die Werte des ersten Satzes von Werten zyklisch um eine weitere vorbestimmte Anzahl von Werten

$$\Delta_k \;=\; \frac{N_s(k-1)}{n_T U}$$

zu verschieben, wobei k einen Nummerierungsindex bezeichnet, der der ersten Empfangsantenne zugeordnet ist, $n_T$ die Gesamtanzahl von Empfangsantennen bezeichnet und U die Anzahl von Benutzern bezeichnet.

**EP 1 573 936 B1**

12. Vorrichtung gemäß einem der Ansprüche 9 bis 11, bei der das Zyklisch-Verschiebung-Element (307) ein Schieberegister ist.

13. Vorrichtung gemäß einem der Ansprüche 10 bis 12, bei der die Einrichtung (301) zum Liefern des ersten Eingangssignals ein Schieberegister aufweist.

14. Vorrichtung gemäß einem der Ansprüche 9 bis 13, bei der das Sendesignal aus einer Mehrträgermodulation eines Mehrträgersignals gebildet ist, das eine Anzahl von Unterträgern aufweist, wobei das Benutzersignal bestimmten Trägerfrequenzen zugeordnet ist, wobei die Einrichtung (313) zum Extrahieren des Benutzersignals folgende Merkmale aufweist:

einen Addierer zum Addieren des ersten und des zweiten Eingangssignals, um ein zusammengesetztes Eingangssignal zu erhalten;
einen Mehrträgerdemodulator zum Demodulieren des zusammengesetzten Eingangssignals; und
einen Selektor zum Auswählen der bestimmten Trägerfrequenzen, um das Behutzersignal aus dem demodulierten zusammengesetzten Eingangssignal zu extrahieren.

15. Vorrichtung gemäß einem der Ansprüche 9 bis 14, die ferner eine Einrichtung zum Liefern der vorbestimmten Anzahl von Werten aufweist.

16. Vorrichtung gemäß einem der Ansprüche 10 bis 15, die ferner eine Einrichtung zum Liefern der vorbestimmten Anzahl von Werten und/oder zum Liefern der weiteren vorbestimmten Anzahl von Werten aufweist.

17. Verfahren zum Erzeugen eines Sendesignals aus einem Mehrbenutzersignal, wobei das Mehrbenutzersignal eine Überlagerung einer Anzahl von Benutzersignalen aufweist, wobei das Mehrbenutzersignal einen Satz von Werten aufweist, das folgende Schritte aufweist:

zyklisches Verschieben des Mehrbenutzersignals, um das Sendesignal zu erhalten, wobei der Satz von Werten zyklisch um eine vorbestimmte Anzahl von Werten verschoben wird, wobei die vorbestimmte Anzahl von Werten durch die Anzahl von Benutzersignalen bestimmt ist; wobei
das Mehrbenutzersignal aus einem Mehrträgersignal gebildet ist, das $N_s$ Trägerfrequenzen aufweist, wobei das Sendesignal durch eine Sendeantenne einer Gesamtanzahl $n_T$ von Sendeantennen gesendet werden soll, wobei die vorbestimmte Anzahl von Werten

$$\Delta_n = \frac{N_s(n-1)}{n_T U}$$

beträgt, wobei n einen Nummerierungsindex bezeichnet, der der Sendeantenne zugeordnet ist, die das Sendesignal sendet, und U die Anzahl von Benutzern bezeichnet.

18. Verfahren zum Verarbeiten eines Mehrbenutzersignals, das folgende Schritte aufweist:

Liefern eines Mehrbenutzersignals aus einer Anzahl von Benutzersignalen;
Erzeugen eines Sendesignals aus dem Mehrbenutzersignal unter Verwendung des Verfahrens gemäß Anspruch 17.

19. Verfahren zum Extrahieren eines Benutzersignals aus einem ersten Empfangssignal und aus einem zweiten Empfangssignal, wobei das erste Empfangssignal eine Version eines Sendesignals ist, das durch eine erste Empfangsantenne einer Gesamtanzahl von Empfangsantennen empfangen wird, wobei das zweite Empfangssignal eine Version des Sendesignals ist, das durch eine zweite Empfangsantenne der Gesamtanzahl von Empfangsantennen empfangen wird, wobei das erste Empfangssignal einen ersten Satz von Werten aufweist, wobei das zweite Empfangssignal einen zweiten Satz von Werten aufweist; wobei das Sendesignal eine Überlagerung einer Anzahl von Benutzersignalen aufweist, wobei das Verfahren folgende Schritte aufweist:

Liefern eines ersten Eingangssignals aus dem ersten Empfangssignal;

**14**

zyklisches Verschieben des zweiten Empfangssignals um eine Anzahl von Werten mit Bezug auf das erste Eingangssignal, um ein zweites Eingangssignal zu erhalten;
Extrahieren des Benutzersignals aus dem ersten und aus dem zweiten Eingangssignal; wobei
das Sendesignal aus einem Mehrträgermodulationsschema unter Verwendung von $N_s$ Unterträgern gebildet ist, wobei die vorbestimmte Anzahl von Werten

$$\Delta_n = \frac{N_s(n-1)}{n_T U}$$

beträgt, wobei n einen Nummerierungsindex bezeichnet, der einer zweiten Empfangsantenne zugeordnet ist, $n_T$ die Gesamtanzahl von Empfangsantennen bezeichnet und U die Anzahl von Benutzern bezeichnet.

20. Computerprogramm, das einen Programmcode zum Durchführen der Verfahren gemäß Anspruch 17 oder 18 oder 19 aufweist, wenn das Programm auf einem Computer läuft.


**Revendications**

1. Appareil pour générer un signal de transmission à partir d'un signal d'utilisateurs multiples, le signal d'utilisateurs multiples comprenant une superposition d'un certain nombre de signaux d'utilisateur, le signal d'utilisateurs multiples comprenant un ensemble de valeurs, comprenant :

   un élément de décalage cyclique (111 ; 115] destiné à décaler cycliquement le signal d'utilisateurs multiples, pour obtenir le signal de transmission, dans lequel l'élément de décalage cyclique (111 ; 115) est opérationnel pour décaler cycliquement l'ensemble de valeurs d'un nombre prédéterminé de valeurs, où le nombre prédéterminé de valeurs est déterminé par le nombre de signaux d'utilisateur ; dans lequel
   le signal d'utilisateurs multiples est formé à partir d'un signal de porteuses multiples ayant $N_s$ fréquences porteuses, dans lequel le signal de transmission doit être transmis par une antenne de transmission parmi un nombre total $n_T$ d'antennes de transmission, où le nombre prédéterminé de valeurs est

$$\Delta_n = \frac{N_s(n-1)}{n_T U}$$

   où n désigne un indice de numérotation associé à l'antenne de transmission transmettant le signal de transmission, et U désigne le nombre d'utilisateurs.

2. Appareil selon la revendication 1, dans lequel un autre signal de transmission doit être transmis par une autre antenne de transmission parmi une pluralité d'antennes, l'appareil comprenant par ailleurs :

   un copieur de signal (103) destiné à fournir une copie du signal d'utilisateurs multiples ; et
   un moyen destiné à générer l'autre signal de transmission à partir de la copie du signal d'utilisateurs multiples.

3. Appareil selon la revendication 2, dans lequel le moyen destiné à générer l'autre signal de transmission est opérationnel pour fournir la copie du signal d'utilisateurs multiples comme autre signal de transmission.

4. Appareil selon la revendication 2, dans lequel le moyen destiné à générer l'autre signal de transmission comprend un autre élément de décalage (111 ; 115) destiné à décaler cycliquement la copie du signal d'utilisateurs multiples comprenant l'ensemble de valeurs, pour obtenir l'autre signal de transmission, dans lequel l'autre élément de décalage cyclique (111 ; 115) est opérationnel pour décaler cycliquement l'ensemble de valeurs d'un autre nombre prédéterminé de valeurs, où l'autre nombre prédéterminé de valeurs est déterminé par le nombre d'utilisateurs.

5. Appareil selon la revendication 4, dans lequel l'autre nombre prédéterminé de valeurs est

$$\Delta_k = \frac{N_s(k-1)}{n_T U}$$

où k désigne un indice de numérotation associé à l'autre antenne de transmission.

6. Appareil selon l'une quelconque des revendications précédentes 1 à 5, comprenant, par ailleurs, un moyen destiné à fournir le nombre prédéterminé de valeurs.

7. Appareil selon les revendications 4 ou 5, comprenant, par ailleurs, un moyen destiné à fournir le nombre prédéterminé de valeurs et/ou l'autre nombre prédéterminé de valeurs.

8. Émetteur à utilisateurs multiples, comprenant :

   un moyen destiné à fournir un signal d'utilisateurs multiples à partir d'un certain nombre de signaux d'utilisateur ;
   l'appareil selon l'une quelconque des revendications 1 à 7, pour générer le signal de transmission à partir du signal d'utilisateurs multiples.

9. Appareil pour extraire un signal d'utilisateur d'un premier signal de réception et d'un deuxième signal de réception, le premier signal de réception étant une version du signal de transmission reçu par une première antenne de réception parmi un nombre total d'antennes de réception, le deuxième signal de réception étant une version du signal de transmission reçu par une deuxième antenne de réception parmi le nombre total d'antennes de réception, le premier signal de réception comprenant un premier ensemble de valeurs, le deuxième signal de réception comprenant un deuxième ensemble de valeurs, le signal de transmission comprenant une superposition d'un certain nombre de signaux d'utilisateur, comprenant :

   un moyen (301) destiné à fournir un premier signal d'entrée à partir du premier signal de réception ;
   un élément de décalage cyclique (307) destiné à décaler cycliquement le deuxième signal de réception d'un nombre prédéterminé de valeurs par rapport au premier signal d'entrée, pour obtenir un deuxième signal d'entrée ;
   un moyen (313) destiné à extraire le signal d'utilisateur du premier et du deuxième signal d'entrée ; dans lequel le signal de transmission est formé à partir d'un aménagement de modulation de porteuses multiples à l'aide de $N_s$ sous-porteuses, où le nombre prédéterminé de valeurs est

$$\Delta_n = \frac{N_s(n-1)}{n_T U}$$

où n désigne un indice de numérotation associé à une deuxième antenne de réception, $n_T$ désigne le nombre total d'antennes de réception et U désigne le nombre d'utilisateurs.

10. Appareil selon la revendication 9, dans lequel le moyen (301) destiné à fournir le premier signal d'entrée est opérationnel pour sortir le premier signal de réception comme premier signal d'entrée lorsque le nombre d'antennes est égal à deux.

11. Appareil selon la revendication 9 ou 10, dans lequel le signal de transmission est formé à partir d'un aménagement de modulation de porteuses multiples à l'aide de $N_s$ sous-porteuses, dans lequel le nombre d'antennes est supérieur à deux, et
dans lequel le moyen (301) destiné à fournir le premier signal d'entrée est opérationnel pour décaler cycliquement les valeurs du premier ensemble de valeurs d'un autre nombre prédéterminé de valeurs

$$\Delta_k = \frac{N_s(k-1)}{n_T U}$$

où k désigne un indice de numérotation associé à la première antenne de réception, $n_T$ désigne le nombre total d'antennes de réception et U désigne le nombre d'utilisateurs.

**12.** Appareil selon les revendications 9 à 11, dans lequel l'élément de décalage cyclique 307 est un registre à décalage.

**13.** Appareil selon les revendications 10 à 12, dans lequel le moyen 301 destiné à fournir le premier signal d'entrée comprend un registre à décalage.

**14.** Appareil selon la revendication 9 à 13, dans lequel le signal de transmission est formé à partir d'une modulation de porteuses multiples d'un signal de porteuses multiples présentant un certain nombre de sous-porteuses, le signal d'utilisateur étant associé à certaines fréquences porteuses, dans lequel le moyen (313) destiné à extraire le signal d'utilisateur comprend
un additionneur destiné à additionner le premier et le deuxième signal d'entrée, pour obtenir un signal d'entrée composite ;
un démodulateur de porteuses multiples, destiné à démoduler le signal d'entrée composite ; et
un sélecteur destiné à sélectionner les certaines fréquences porteuses, pour extraire le signal d'utilisateur du signal d'entrée composite démodulé.

**15.** Appareil selon les revendications 9 à 14, comprenant, par ailleurs, un moyen destiné à fournir le nombre prédéterminé de valeurs.

**16.** Appareil selon les revendications 10 à 15, comprenant, par ailleurs, un moyen destiné à fournir le nombre prédéterminé de valeurs et/ou à fournir l'autre nombre prédéterminé de valeurs.

**17.** Procédé pour générer un signal de transmission à partir d'un signal d'utilisateurs multiples, le signal d'utilisateurs multiples comprenant une superposition d'un certain nombre de signaux d'utilisateur, le signal d'utilisateurs multiples comprenant un ensemble des valeurs, comprenant les étapes suivantes consistant à :

décaler cycliquement le signal d'utilisateurs multiples, pour obtenir le signal de transmission, dans lequel l'ensemble de valeurs est décalé cycliquement d'un nombre prédéterminé de valeurs, où le nombre prédéterminé de valeurs est déterminé par le nombre de signaux d'utilisateur ; dans lequel
le signal d'utilisateurs multiples est formé à partir d'un signal de porteuses multiples ayant $N_s$ fréquences porteuses, dans lequel le signal de transmission doit être transmis par une antenne de transmission parmi un nombre total $n_T$ d'antennes de transmission, dans lequel le nombre prédéterminé de valeurs est

$$\Delta_n = \frac{N_s\,(n-1)}{n_T U}$$

où n désigne un indice de numérotation associé à l'antenne de transmission transmettant le signal de transmission, et U désigne le nombre d'utilisateurs.

**18.** Procédé pour traiter un signal d'utilisateurs multiples, comprenant les étapes suivantes consistant à :

fournir un signal d'utilisateurs multiples à partir d'un certain nombre de signaux d'utilisateur ;
générer un signal de transmission à partir du signal d'utilisateurs multiples à l'aide du procédé de la revendication 17.

**19.** Procédé pour extraire un signal d'utilisateur d'un premier signal de réception et d'un deuxième signal de réception, premier signal de réception étant une version d'un signal de transmission reçu par une première antenne de réception parmi un nombre total d'antennes de réception, le deuxième signal de réception étant une version du signal de transmission reçu par une deuxième antenne de réception parmi le nombre total d'antennes de réception, le premier signal de réception comprenant un premier ensemble des valeurs, le deuxième signal de réception comprenant un deuxième ensemble des valeurs, le signal de transmission comprenant une superposition d'un certain nombre de signaux d'utilisateur, le procédé comprenant les étapes suivantes consistant à :

fournir un premier signal d'entrée à partir du premier signal de réception ;

décaler cycliquement le deuxième signal de réception d'un certain nombre de valeurs par rapport au premier signal d'entrée, pour obtenir un deuxième signal d'entrée ;
extraire le signal d'utilisateur du premier et du deuxième signal d'entrée ; dans lequel
le signal de transmission est formé à partir d'un aménagement de modulation de porteuses multiples à l'aide de $N_s$ sous-porteuses, dans lequel le nombre prédéterminé de valeurs est

$$\Delta_n = \frac{N_s(n-1)}{n_T U}$$

où n désigne un indice de numérotation associé à une deuxième antenne de réception, $n_T$ désigne le nombre total d'antennes de réception et U désigne le nombre d'utilisateurs.

20. Programme d'ordinateur présentant un code de programme pour exécuter les procédés selon la revendication 17 ou 18 ou 19 lorsque le programme se déroule sur un ordinateur.

FIG 1

Multiuser
signal

101

103

109

105

107

111

Δk

115

Δn

119

Further transmit signal

113

Further transmit signal

117

Transmit signal

# FIG 2

# FIG 4

# FIG 5

# FIG 6A

1 transmit antenna:

$|H(f)|$

$f$

$N_s$

uncoded error rate

$f$

# FIG 6B

Cyclic delay diversity:

$|H(f)|$

$f$

$N_s$

uncoded error rate

$f$

# FIG 7